# EUROPÄISCHE PATENTSCHRIFT

(11) **EP 1 888 695 B1**
(45) Veröffentlichungstag und Bekanntmachung des Hinweises auf die Patenterteilung: **19.03.2014**
(21) Anmeldenummer: 06753234.1
(22) Anmeldetag: 01.06.2006
(51) Int. Cl.: C09B 67/54

(54) **VERFAHREN ZUR AUFREINIGUNG VON BETAINEN**
METHODS FOR PURIFICATION OF BETAINES
PROCEDE DE PURIFICATION DE BETAINES

(30) Priorität: 01.06.2005 DE 102005025560
(43) Veröffentlichungstag der Anmeldung: 20.02.2008
(73) Patentinhaber: Pulsion Medical Systems AG, 81829 München (DE)
(72) Erfinder: PIETER, Ina, 64625 Bensheim (DE); HANKE, Bernhard, 64625 Bensheim (DE)
(74) Vertreter: Ascherl, Andreas
(86) Internationale Anmeldenummer: PCT/DE2006/000959
(87) Internationale Veröffentlichungsnummer: WO 2006/128451

(56) Entgegenhaltungen:
- WO-A-95/07888
- WO-A2-2004/078109
- DE-A1- 2 046 141
- US-A- 2 245 249
- US-A- 2 895 955
- US-A1- 2004 192 917
- DATABASE WPI Week 199910 Derwent Publications Ltd., London, GB; AN 1999-106746 XP002408022 & CN 1 196 351 A (HONGFENG CHEM CO LTD GUAN COUNTY HEBEI) 21. Oktober 1998 (1998-10-21)

## Beschreibung

Die vorliegende Erfindung betrifft ein Verfahren zur Reinigung von synthetisch hergestellten chemischen Stoffen, die eine Betain-Struktur im Molekül enthalten.

Insbesondere ist dieses Verfahren zur Aufreinigung von Indocyaningrün (Indocyanine Green), einem in der amerikanischen Pharmacopoee beschriebenen Farbstoff, geeignet. Indocyaningrün ist 2-{7-[1,3-dihydro-1,1-dimethyl-3-(4-sulfobutyl)-2*H*-benz[*e*]indol-2-yliden]-1,3,5-heptatrienyl}-1,1-dimethyl-3-(4-sulfobutyl)-1*H*-benz[*e*]indolinium-hydroxid, Betain-Na-triumsalz und wird durch folgende chemische Struktur charakterisiert:

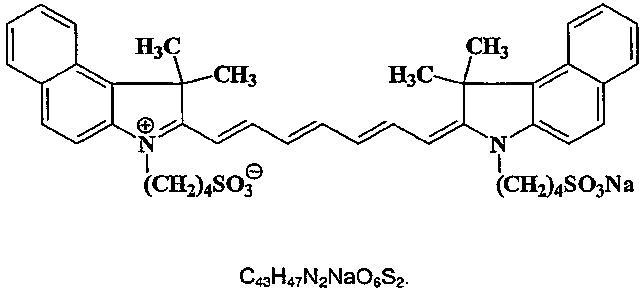

Indocyaningrün stellt einen grünen Farbstoff dar, der in der Medizin u. a zur Diagnostik der Herz-, Kreislauf-, Mikrozirkulations- und Leberfunktion eingesetzt wird.

Die Herstellung von Indocyaningrün erfolgt z.B. durch Kondensation von zwei Indoliniummolekülen unter Verwendung von Natriumjodid. Das Natriumiodid wird dem Syntheseansatz zugefügt, um eine Fällung des Farbstoffes herbeizuführen. Herkömmliche Maßnahmen zur Reduzierung des Natriumiodidgehaltes sind aufwändig und kostenintensiv, was zu deutlich erhöhten Herstellungskosten des Farbstoffes führt. Die diskontinuierliche Aufarbeitung von Indocyaningrün (ICG) mit Hilfe von Kristallisation bzw. Ausfällungen ist nur eingeschränkt möglich, eine großtechnische Aufreinigung des Stoffes ist nahezu unmöglich. Auch chromatographische Methoden zur Aufreinigung von ICG sind zwar im Labormaßstab denkbar, größere Mengen lassen sich jedoch nicht in einem einzigen Arbeitsgang reinigen.

Der vorliegenden Erfindung lag die Aufgabe zugrunde, ein Verfahren zur Aufreinigung von Indocyaningrün, zur Verfügung zu stellen, bei welchem der aus dem Stand der Technik übliche und in großtechnischen Anlagen auch eingeführte Syntheseweg unverändert bleiben kann.

Gegenstand der vorliegenden Erfindung ist demgemäß ein Verfahren gemäß Anspruch 1.

Das erfindungsgemäße Verfahren macht sich die Löslichkeitsunterschiede zwischen den Verunreinigungen und Betainen zunutze. Besonders gut geeignet ist das Verfahren zur Aufreinigung von Indocyaningrün, wenn bei dessen Herstellung zur Überführung der Säure in das entsprechende Na-Salz Natriumiodid (Nal) als Fällungsreagenz eingesetzt wird.

Die Verwendung von Nal, das nach den bisherigen Aufreinigungsmethoden noch in mehreren % in handelsüblichen Produkten enthalten sein kann, könnte die Ursache sein, dass Art und Umfang des diagnostischen Einsatzes von ICG Einschränkungen erfahren.

Daher war man bislang häufig um Synthesewege von ICG bemüht, bei welchen Iodid als Nebenprodukt nicht auftritt, z.B. wie in WO 95/07888 A beschrieben.

Die Extraktion wird in einem organischen, vorzugsweise wasserfreien Lösungsmittel, insbesondere in aprotischen Lösungsmitteln (z.B. CH₂Cl₂ bzw. Essigester) durchgeführt. Die Möglichkeit, Nal aus Indocyaningrün zu entfernen bzw. davon durch Extraktion abzutrennen, ist insoweit überraschend, da das Indocyaningrün in dem bevorzugt eingesetzten wasserfreien Lösungsmittel CH₂Cl₂ nur mäßig löslich, wohingegen Nal unlöslich ist.

Da einige der zu entfernenden Verunreinigungen, wie z. B. anorganische Salze, so auch Nal, in Wasser löslich sind, wird als Lösemittel vorzugsweise wasserfreies Lösemittel eingesetzt. Die Trocknung der wasserfreien Lösemittel kann in an sich bekannter Weise über Molekularsiebe, P₂O₅ etc. erfolgen.

Die erfindungsgemäße Extraktion kann durch Ausschütteln (sequentielle Extraktion) oder kontinuierlich durchgeführt werden. Die sequentielle Extraktion erfolgt üblicherweise in einem Schütteltrichter. Das Ausschütteln der Substanzen ist jedoch relativ umständlich, zeitaufwendig und daher weniger bevorzugt. Vorzugsweise wird daher die Extraktion kontinuierlich durchgeführt. Besonders geeignet ist hierfür die so genannte Soxhlet-Extraktion.

Für die kontinuierliche Extraktion wird das aufzureinigende Gut vorzugsweise in eine für das Lösungsmittel durchlässige Hülse oder ähnliche Aufnahmevorrichtung gegeben und kontinuierlich von Lösemittel knapp unterhalb dessen Siedepunktes durchspült. Dabei werden die löslichen Bestandteile aufgelöst, während unlösliche Bestandteile in der Aufnahmevorrichtung zurückbleiben d.h. bei der Aufreinigung von Indocyaningrün wird diese Verbindung von dem Extraktionslösungsmittel gelöst und aus der Vorlage entfernt, während im verwendeten Lösungsmittel unlösliche Substanzen, z. B. Nal, zurückbleiben.

### Beispiel

Zur Durchführung des erfindungsgemäßen Verfahrens wurde ein aus einer üblichen Industrieproduktion erhältliches Indocyaningrün, das 4,6 % Nal enthielt, in einer Soxhlet-Apparatur der kontinuierlichen Extraktion unterworfen.

Zur Herstellung von wasserfreiem Methylenchlorid wurden 500 ml Methylenchlorid über Molekularsieb (4 Å von der Fa. Roth, 0,4 nm, Perlform) getrocknet und anschließend destilliert. 100 ml des Vorlaufs wurden verworfen, so dass für die nachfolgende kontinuierliche Extraktion ca. 400 ml gereinigtes und getrocknetes Methylenchlorid zur Verfügung standen.

266 mg Indocyaningrün wurden in eine für die Soxhlet-Apparatur geeignete Papierhülse eingewogen. Als Vorlage wurden 250 ml des gereinigten und getrockneten Methylenchlorids in einen 500 ml-Kolben gegeben. Die Apparatur enthielt weiter einen Rückflusskühler und ein darauf gesetztes, mit CaCl₂ gefülltes Trockenrohr. Die Extraktion wurde über einen Zeitraum von 30 Stunden bei einer Wasserbadtemperatur von 48°C durchgeführt. Anschließend wurde die erhaltene tiefgrüne Lösung am Rotationsverdampfer eingeengt und lyophilisiert.

Das erhaltene Indocyaningrün enthielt < 0,4 % Nal. Diese Menge liegt um mehr als das 10-fache unterhalb des von der USP festgelegten Toleranzbereiches für die parenterale Anwendung von Indocyaningrün (Indocyanine Green for Injection).

Extraktionen mit Lösungsmitteln wie Aceton führten dazu, dass Nal, welches in diesen in gewissem Umfang löslich ist, mit extrahiert wurde.

Die Extraktion mit Lösungen wie z.B. mit Aceton, Chloroform, Cyclohexan und Heptan führte zu keiner Trennung der Stoffe Indocyaningrün und Nal.

## Patentansprüche

1. Verfahren zur Reinigung von synthetisch hergestelltem Indocyaningrün,
wobei Reaktionsnebenprodukte, Ausgangsverbindungen und/oder sonstige Verunreinigungen durch Extraktion mit einem organischen Lösungsmittel, wobei Aceton, Chloroform, Cyclohexan und Heptan ausgenommen sind, abgetrennt werden, **dadurch gekennzeichnet,**
**dass** das abgetrennte Nebenprodukt ein Jodid ist.

2. Verfahren nach Anspruch 1,
**dadurch gekennzeichnet,**
**dass** das abgetrennte Nebenprodukt Natriumjodid ist.

3. Verfahren nach einem der Ansprüche 1 oder 2,
**dadurch gekennzeichnet,**
**dass** die Extraktion mit Methylenchlorid durchgeführt wird.

4. Verfahren nach einem der Ansprüche 1 bis 3,
**dadurch gekennzeichnet,**
**dass** die Extraktion kontinuierlich durchgeführt wird.

5. Verfahren nach Anspruch 4, **dadurch gekennzeichnet, dass** die Extraktion durch das Soxhlet-Verfahren durchgeführt wird.

## Claims

1. Method for purification of synthetically produced chemical indocyanine green,
wherein reaction by-products, starting compounds and/or other contaminants are removed by extraction with an organic solvent, wherein acetone, chloroform, cyclohexane and heptane are excluded,
**characterized in that**
the by-product that is removed is an iodide.

2. Method according to claim 1,
**characterized in that**
the by-product that is removed is sodium iodide.

3. Method according to one of claims 1 or 2,
**characterized in that**
the extraction is carried out with methylene chloride.

4. Method according to one of claims 1 to 3,
**characterized in that**
the extraction is carried out continuously.

5. Method according to one of claims 1 to 4,
**characterized in that**
the extraction is carried out by means of the Soxhlet method.

## Revendications

1. - Procédé de purification de vert d'indocyanine obtenu de manière synthétique, suivant lequel des sous-produits de réaction, des composés de départ et/ou autres impuretés sont séparés par extraction par un solvant organique, l'acétone, le chloroforme, le cyclohexane et l'heptane étant exclus, **caractérisé par le fait que** le sous-produit séparé est un iodure.

2. - Procédé selon la revendication 1, **caractérisé par le fait que** le sous-produit séparé est l'iodure de sodium.

3. - Procédé selon l'une des revendications 1 ou 2, **caractérisé par le fait que** l'extraction est effectuée avec du chlorure de méthylène.

4. - Procédé selon l'une des revendications 1 à 3, **caractérisé par le fait que** l'extraction est effectuée de manière continue.

5. - Procédé selon la revendication 4, **caractérisé par le fait que** l'extraction est effectuée par le procédé de Soxhlet.
